# DEMANDE DE BREVET EUROPEEN

(11) **EP 2 894 387 A2**
(43) Date de publication de la demande: **15.07.2015**
(21) Numéro de dépôt: 14198906.1
(22) Date de dépôt: 18.12.2014
(51) Int. Cl.: F17C 1/16, F17C 1/06

(54) **Réservoir destiné au stockage de milieux liquides ou gazeux sous pression**

(30) Priorité: 20.12.2013 FR 1363271
(71) Demandeur: EADS Composites Aquitaine, 33160 Salaunes (FR)
(72) Inventeur: Fourage, Guillaume, 33200 Bordeaux (FR); Lagunegrand, Laurent, 33300 Bordeaux (FR)
(74) Mandataire: Coquel, Jean-Marc

(57) **Abrégé**

L'invention concerne un réservoir destiné au stockage de milieux liquides ou gazeux sous pression, comprenant une enveloppe (14) intérieure définissant une chambre de stockage, ladite enveloppe (14) intérieure comprenant une ouverture (15), une embase (13) placée au niveau de ladite ouverture (15) pour assurer la connexion intérieur/extérieur dudit réservoir et une enveloppe (17) de renforcement mécanique entourant au moins ladite enveloppe (14) intérieure, ladite embase (13) comportant une partie de col (18) cylindrique creux définissant un canal (19) intérieur et une partie annulaire (20) comprenant une surface inférieure constituant la surface inférieure de ladite embase (13), ladite surface inférieure étant placée en vis-à-vis d'une surface de contact (26) de ladite enveloppe (14) intérieure.

Selon l'invention, ladite embase (13) comporte dans son épaisseur au moins un évent (29,35) distinct dudit canal, ledit au moins un évent (29,35) débouchant à une première de ses extrémités à la surface inférieure de ladite partie annulaire (20) et à son autre extrémité dans ledit canal (19) intérieur de manière à assurer l'évacuation des gaz ayant traversé la paroi de l'enveloppe (14) intérieure.

## Description

### ARRIERE-PLAN DE L'INVENTION

### Domaine de l'invention

La présente invention concerne un réservoir destiné au stockage de milieux liquides ou gazeux sous pression.

L'invention concerne encore un moyen de transport tel qu'une automobile ou un aéronef, équipé d'au moins un tel réservoir.

### Arrière-plan technologique

Le pouvoir calorifique élevé de l'hydrogène et sa conversion en vapeur d'eau, donc non polluante, lorsqu'il est utilisé dans un moteur, font de ce gaz une énergie alternative prometteuse aux énergies fossiles. De nombreuses recherches sont actuellement menées pour assurer un transport en grands volumes et de manière sûr de l'hydrogène dans l'objectif d'alimenter en carburant des véhicules hybrides.

Pour leur transport, de tels gaz sont typiquement comprimés dans des réservoirs destinés au stockage de gaz sous haute pression (entre 200 et 1000 bars par exemple), le plus souvent cylindriques, lesquels sont fermés par des dômes pourvus ou non chacun d'un embout.

Pour résister aux fortes pressions des gaz ainsi stockés, ces réservoirs comportent un liner placé dans une enveloppe de renfort réalisée en matériau composite. Classiquement, le dépôt des fibres et de la résine pour former l'enveloppe de renfort est réalisé par un enroulement filamentaire.

Les réservoirs peuvent ainsi être de plusieurs types, soit à liner métallique recouvert d'une couche de composite sur sa partie centrale (Type II), soit à liner métallique entièrement recouvert de composite (Type III), soit à liner en matière plastique recouvert de composite (Type IV).

Les principaux avantages des liners thermoplastiques par rapport aux liners métalliques résident dans leur poids moins élevé et en une tenue mécanique supérieure aux sollicitations cycliques.

Toutefois, on a observé pour les réservoirs de Type IV, des dégradations de l'enveloppe par déformation permanente du liner polymère lorsque la vitesse de vidage était trop élevée. Ce phénomène est communément appelé « collapse » ou « blistering » du liner.

Une des raisons possibles de ce phénomène est la relative perméabilité au gaz stocké du matériau polymère constitutif du liner. Une partie du gaz initialement stocké à l'intérieur du liner passe ainsi au travers de la paroi du liner.

Or, dans les réservoirs conventionnels, le liner est collé à l'enveloppe de renfort ce qui empêche l'évacuation vers l'extérieur du gaz ayant traversé la paroi du liner, qui se trouve dès lors piégé. On assiste à la formation de poches de gaz entre la surface externe du liner et la surface intérieure de l'enveloppe de renfort.

Lors du vidage du réservoir, une différence de pression peut se créer entre l'interstice comportant les poches de gaz et le volume intérieur du liner conduisant à la formation de cloques.

Ces cloques disparaissent après rechargement du réservoir pour apparaître de nouveau lors d'une utilisation ultérieure du réservoir.

Une telle déformation permanente peut conduire à l'apparition de fissures ou de criques dans la paroi du liner, lesquelles peuvent provoquer une détérioration du réservoir et des fuites dangereuses.

Pour surmonter cet inconvénient, il a été proposé de réaliser des réservoirs composites pour gaz sous pression pourvus de chemins d'évacuation des gaz ayant traversé la paroi du liner vers l'extérieur.

Notamment, on connaît de l'état de l'art, un réservoir comportant une embase équipée d'un robinet, l'ensemble constitué de cette embase et de ce robinet comportant une zone d'évacuation des gaz ayant traversé la paroi du liner vers l'atmosphère, laquelle passe dans l'épaisseur du corps du robinet.

Or, la réalisation d'un tel ensemble embase/robinet est particulièrement laborieuse car elle requiert la création d'une pluralité d'ouvertures pour définir la zone d'évacuation, pour lesquelles il est nécessaire de s'assurer de leur mise en communication de fluide. Par ailleurs, cet ensemble nécessite la mise en oeuvre de pièces supplémentaires telles que plusieurs joints d'étanchéité.

Il en résulte un surcoût de fabrication et une grande complexité du réservoir.

En outre, cette zone d'évacuation des gaz débouche au niveau de la surface extérieure de l'embase en contact avec ou placé à proximité immédiate de l'enveloppe de renfort réalisée en matériau composite.

Or, on observe lors de la fabrication d'un tel réservoir, un fluage de la résine qui peut venir boucher la zone d'évacuation des gaz et rendre ainsi inopérante cette dernière.

La présente invention vise à pallier ces divers inconvénients de l'art antérieur en proposant un réservoir de stockage de gaz sous pression simple dans sa conception et dans son mode opératoire, économique et autorisant le remplissage, le stockage et le vidage d'un gaz sous pression sans risque de détérioration de celui-ci.

Un autre objet de la présente invention est un réservoir pourvu d'une zone d'évacuation des gaz ayant traversé la paroi du liner, qui est protégée de toute pollution extérieure au réservoir.

### BREVE DESCRIPTION DE L'INVENTION

A cet effet, l'invention concerne un réservoir destiné au stockage de milieux liquides ou gazeux sous pression, comprenant une enveloppe intérieure définissant une chambre de stockage, ladite enveloppe intérieure comprenant une ouverture, une embase placée au niveau de ladite ouverture pour assurer la connexion intérieur/extérieur dudit réservoir et une enveloppe de renforcement mécanique entourant au moins ladite enveloppe intérieure, ladite embase comportant une partie de col cylindrique creux définissant un canal intérieur et une partie annulaire comprenant une surface inférieure constituant la surface inférieure de ladite embase, ladite surface inférieure étant placée en vis-à-vis d'une surface de contact de ladite enveloppe intérieure.

Selon l'invention, ladite embase comporte au moins un évent distinct du canal intérieur, ledit au moins un évent débouchant à une première de ses extrémités à la surface inférieure de ladite partie annulaire et à son autre extrémité dans ledit canal intérieur de manière à assurer l'évacuation des gaz ayant traversé la paroi de l'enveloppe intérieure.

Bien entendu, la première extrémité dudit au moins un évent est en communication de fluide avec l'espace, ou interstice, séparant la surface externe de ladite enveloppe intérieure de la surface interne de ladite enveloppe de renforcement du réservoir de stockage de manière à assurer l'évacuation des gaz ayant traversé la paroi de l'enveloppe intérieure.

L'évent qui est ainsi formé dans l'épaisseur de l'embase, est interne au corps de l'embase et débouche à ses deux extrémités sur des zones extérieures de l'embase qui ne sont pas en communication avec l'enveloppe de renforcement mécanique.

On empêche ainsi avantageusement tout risque d'obstruction du ou des évents lors de la fabrication du réservoir.

La surface inférieure de l'embase est, par ailleurs, placée en vis-à-vis d'une surface de contact de l'enveloppe intérieure de sorte que cette dernière est placée sous l'embase.

Cette embase peut être entièrement métallique ou en alliage, ou comporter un insert métallique ou en alliage recouvert au moins en partie d'une interface plastique pour faciliter l'assemblage de l'enveloppe intérieure et de l'embase.

Alternativement, cette embase peut être réalisée en matière plastique ou en matière plastique renforcée. A titre d'exemple purement illustratif, la matière plastique est renforcée avec des fibres courtes ou longues ou encore broyées, ou avec des billes. Ces fibres et ces billes peuvent être en verre ou en carbone.

Une telle embase permet ainsi avantageusement :
- d'évacuer de manière aisée les gaz ayant traversé la paroi de l'enveloppe intérieure au niveau du canal intérieur de l'embase, lequel débouche sur l'extérieur du réservoir, et
- d'éviter toute dégradation de la résistance mécanique du réservoir même en cas de vidage accéléré de son contenu.

On a également avantageusement observé que le design original du réservoir de la présente invention permettait de réduire de manière significative les pics d'émission de gaz ayant traversé la paroi du liner, lors du remplissage du réservoir par rapport au pic d'émission relevé lors du remplissage d'un réservoir présentant un liner collapsé avec des poches de gaz stockées entre le liner et le composite.

La réduction de ce pic d'émission de gaz s'accompagne d'une réduction d'émission du bruit lié au collapse du liner (déformation du liner, arrachement à l'interface liner/composite) ainsi qu'à l'évacuation brutale d'une grande quantité de gaz.

L'enveloppe de renforcement mécanique est disposée sur au moins une partie de l'enveloppe intérieure en entourant celle-ci.

Le présent réservoir trouve des applications dans les domaines mettant en oeuvre des récipients de stockage sous pression tels que l'automobile, l'aéronautique, ...

Dans différents modes de réalisation particuliers de ce réservoir, chacun ayant ses avantages particuliers et susceptibles de nombreuses combinaisons techniques possibles:
- l'enveloppe intérieure comporte une ouverture à ses deux extrémités, chacune de ses extrémités recevant une embase.
   A titre d'exemple purement illustratif, une première de ces embases comprend un raccord tel qu'un robinet, l'autre extrémité comportant un élément choisi dans le groupe comprenant un robinet, un capteur de pression et/ou de température et/ou d'humidité, un accéléromètre, un dispositif de sécurité, un dispositif de sécurité de type PRD ("Pressure Relief Device" - "Dispositif de détente "), un dispositif de sécurité de type TPRD ("Thermal Pressure Relief Device" - "Dispositif de détente thermique") et des combinaisons de ces éléments.
   Alternativement, l'enveloppe intérieure comporte à une de ses extrémités une ouverture, l'autre extrémité étant fermée et l'extrémité ouverte reçoit une embase.
- ce canal intérieur comportant une portion de canal supérieure appelée portion hors pression de stockage, et une portion de canal inférieure, appelée portion sous pression de stockage, ces portions étant délimitées ou destinées à être délimitées par un joint d'étanchéité, ledit au moins un évent débouche à sa première extrémité dans ladite portion de canal supérieure.
   Ce joint d'étanchéité typiquement assure l'étanchéité entre un raccord tel qu'un robinet ou une valve, et l'embase. Il peut s'agir d'un joint torique ou O-ring.
- les premier et second éléments d'embase sont métalliques tels qu'en aluminium ou en inox, mais peuvent également être réalisés en matière plastique et/ou en plastique renforcé de fibres,
- ledit au moins un évent débouche à sa seconde extrémité sur une portion de ladite surface inférieure distincte de la périphérie de ladite partie annulaire,
- ledit évent ou au moins certains desdits évents sont formés chacun par une ouverture réalisée dans l'épaisseur de ladite embase.
   De préférence, cette embase comprend au moins deux conduits répartis régulièrement autour dudit canal et rejoignant la surface inférieure de ladite partie annulaire.
   Ces conduits peuvent rejoindre de biais la surface inférieure de la partie annulaire. De manière avantageuse, ces conduits sont tubulaires.
- ladite embase comportant un insert métallique ou en alliage dont une partie au moins de sa surface est recouverte d'une interface plastique, une première partie de cette interface plastique forme la surface inférieure ou partiellement la surface inférieure de ladite partie annulaire et une deuxième partie de ladite interface recouvre au moins en partie la surface supérieure de ladite partie annulaire.
   Avantageusement, l'enveloppe intérieure comprenant un col, la partie de col de l'embase comporte dans sa partie inférieure à partir de la laquelle s'étend radialement la partie annulaire, une gorge annulaire cylindrique et l'interface plastique comporte une portion tubulaire creuse reçue au moins dans cette gorge annulaire, ladite portion tubulaire creuse comprenant une zone d'assemblage avec ledit col de l'enveloppe intérieure.
   A titre purement illustratif, l'assemblage entre le col de l'enveloppe intérieure, ou liner, et l'embase peut être réalisé par collage ou par soudure telle qu'une soudure par friction rotative.
   Dans le premier cas, la zone d'assemblage de l'interface plastique comporte un évidement annulaire. Dans le second cas, cette zone d'assemblage comporte une interface de soudure complémentaire d'une interface de soudure du col de l'enveloppe intérieure de manière à assurer la fusion desdites interfaces lorsque l'interface plastique et l'enveloppe intérieure sont assemblées par friction rotative.
- cette embase est uniquement métallique ou en alliage ou comporte un insert métallique ou en alliage dont une partie au moins de sa surface est recouverte d'une interface plastique, au moins une portion de la surface inférieure de ladite partie annulaire adjacente audit canal étant non recouverte par ladite interface plastique.

Cette embase peut alors comporter au moins deux conduits répartis régulièrement autour dudit canal et rejoignant de biais la surface inférieure de ladite partie annulaire. De préférence, ces conduits sont des conduits tubulaires.

Alternativement, cette embase comprend une première portion d'embase solidaire uniquement de ladite enveloppe intérieure et une seconde portion d'embase solidaire uniquement de ladite enveloppe de renforcement mécanique, lesdites première et seconde portions d'embase étant distinctes et non liées entre elles, ledit évent étant formé par l'espace séparant lesdites portions d'embase.

De préférence, chacune desdites portions d'embase comprenant une portion de ladite partie de col et une portion de ladite partie annulaire, et ladite seconde portion d'embase étant fixe, ladite première portion d'embase est mobile par rapport à ladite seconde portion d'embase entre une première position dite de réservoir plein où ladite enveloppe intérieure étant remplie et sous pression, ladite première portion d'embase est au moins partiellement en contact avec ladite seconde portion d'embase, l'extrémité libre de la portion de partie de col de la première portion d'embase étant placée en retrait de l'extrémité libre de la portion de la partie de col de la seconde portion d'embase, et une seconde position dite réservoir vide, où ladite enveloppe intérieure étant vide de son contenu, l'extrémité libre de la portion de partie de col de ladite première portion d'embase est entourée au moins en partie par la portion de partie de col de la seconde portion d'embase de sorte que lesdites portions de partie de col desdites portions d'embase restent engagées au moins partiellement l'une dans l'autre.

Bien entendu, la première portion d'embase peut explorer n'importe quelle position entre ces deux positions extrêmes en fonction de l'état de vidage de l'enveloppe intérieure.

De même, dans la seconde position dite de réservoir vide, la portion de ladite partie annulaire de la première portion d'embase est placée à distance de la portion de ladite partie annulaire de la seconde portion d'embase. Avantageusement, la première portion d'embase comporte une portion de partie de col mâle conique et la seconde portion d'embase comporte une portion de partie de col femelle conique, lesdites portions de partie de col coniques coopérant entre elles pour définir ladite partie de col de ladite embase.

De manière avantageuse, cette forme tronconique des portions de partie de col des première et seconde portions d'embase autorise un guidage de la première portion d'embase lors de son déplacement par rapport à la seconde portion d'embase fixe.

De plus, cette forme tronconique des portions de partie col des portions d'embase permet avantageusement de reporter une partie des efforts s'appliquant sur la première portion d'embase mobile et liés à la pression interne de l'enveloppe intérieure, sur la portion de partie de col femelle conique de la seconde portion d'embase.

On constate ainsi une diminution significative des contraintes s'appliquant sur la partie annulaire de l'embase.

De manière plus générale, il existe une zone de la partie de col de l'embase pour laquelle le diamètre extérieur de la portion de partie de col de la première portion d'embase diminue dans le sens d'évacuation des gaz, c'est-à-dire en allant vers l'orifice de sortie du réservoir, tandis que le diamètre intérieur de la portion de partie de col de la seconde portion d'embase diminue en allant dans le même sens d'évacuation des gaz.

A titre purement illustratif, la portion de partie de col de la première portion d'embase présente une forme évasée en allant de l'orifice de sortie du réservoir vers l'enveloppe intérieure, cette forme pouvant être tronconique, conique, arrondie, ...

De préférence, le réservoir comporte au moins un moyen formant butée pour empêcher le désengagement de la première portion d'embase mobile par rapport à la seconde portion d'embase.

De manière avantageuse, le réservoir comporte un moyen de blocage en rotation desdites portions d'embase entre elles.

Ce moyen de blocage peut être réalisé en vue de limiter la rotation d'une portion d'embase par rapport à l'autre portion d'embase.
- au moins une partie de la surface inférieure de ladite partie annulaire comporte une ou plusieurs rainures débouchant à une de leurs extrémités dans ledit au moins un évent et à leur autre extrémité à la périphérie de ladite partie annulaire de manière à former des chemins de collecte et d'évacuation des gaz piégés,
- ladite enveloppe intérieure est métallique ou en matière plastique,
- ladite partie annulaire a un profil effilé en triangle ou sensiblement en triangle vers sa périphérie,
- ledit réservoir est équipé d'un joint d'étanchéité ou d'un bouchon pour éviter toute pollution de l'espace séparant la surface externe de ladite enveloppe intérieure et la surface interne de ladite enveloppe de renforcement du réservoir de stockage.

De manière avantageuse, un tel bouchon faisant office de cache-poussière, empêche toute pollution de cet espace lorsque le réservoir de stockage n'est pas en service.

De même, un joint d'étanchéité placé à l'extrémité du col et en contact avec un raccord assure cette fonction lorsque le réservoir est en service.
- le réservoir est rempli avec un gaz ou un mélange de gaz.
A titre purement illustratif, ce gaz peut être de l'air, l'azote, l'hélium, l'hydrogène ou autre.

La présente invention concerne également un moyen de transport équipé d'au moins un réservoir tel que décrit précédemment.

Ce moyen de transport peut être un aéronef ou un véhicule tel qu'un camion ou une automobile.

La présente invention concerne encore l'utilisation du réservoir tel que décrit précédemment comme source d'alimentation en gaz ou en combustible.

Un tel réservoir peut être mis en oeuvre en tant que source d'alimentation stationnaire ou embarquée à bord d'un moyen de transport.

A titre purement illustratif, un tel réservoir peut être utilisé comme source d'alimentation pour une pile à combustible ou encore dans une installation de remplissage ou de distribution telle qu'une station-service.

La présente invention concerne encore l'utilisation du réservoir tel que décrit précédemment comme accumulateur d'énergie.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement un réservoir destiné au stockage de gaz sous pression selon un premier mode de réalisation de la présente invention,
- la Figure 2 est une vue en coupe longitudinale du réservoir de la Fig. 1,
- la figure 3 est une vue élargie et partielle de l'extrémité dudit réservoir de la Fig. 2,
- la figure 4 est une vue partielle et en coupe d'un réservoir destiné au stockage de gaz sous pression selon un deuxième mode de réalisation de la présente invention, le réservoir étant plein,
- la figure 5 montre le réservoir de la Fig. 4 après que celui-ci ait été utilisé, l'enveloppe intérieure étant vidée de son gaz,
- la figure 6 est une vue partielle et en coupe d'un réservoir destiné au stockage de gaz sous pression selon un troisième mode de réalisation de la présente invention, le réservoir étant plein,
- la figure 7 montre le réservoir de la Fig. 6 après que celui-ci ait été utilisé, l'enveloppe intérieure étant vidée de son gaz.
- la figure 8 est une vue partielle et en coupe d'un réservoir destiné au stockage de gaz sous pression selon un quatrième mode de réalisation de la présente invention, le réservoir étant plein,
- la figure 9 montre le réservoir de la Fig. 8 après que celui-ci ait été utilisé, l'enveloppe intérieure étant vidée de son gaz.

### DESCRIPTION DETAILLEE DE MODES DE REALISATION DE L'INVENTION

Tout d'abord, on note que les figures ne sont pas à l'échelle.

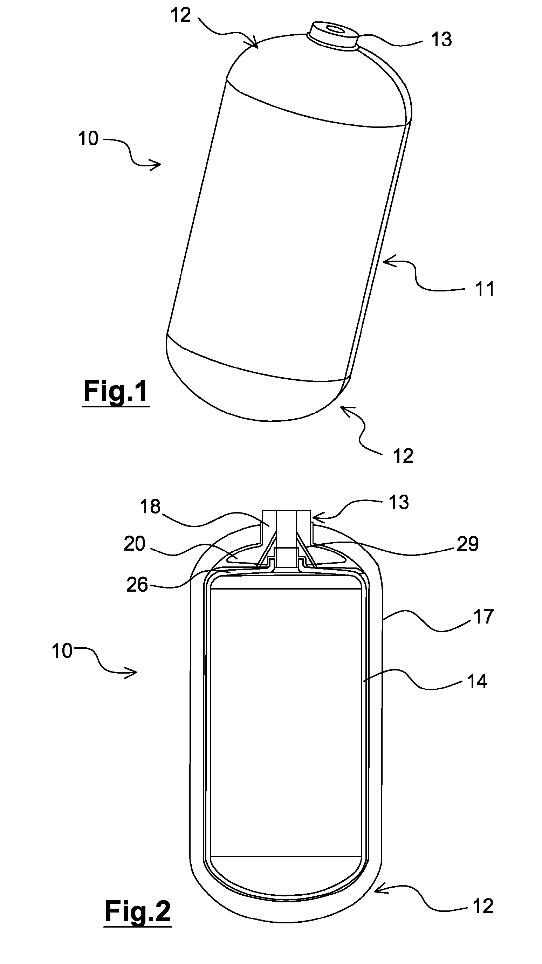

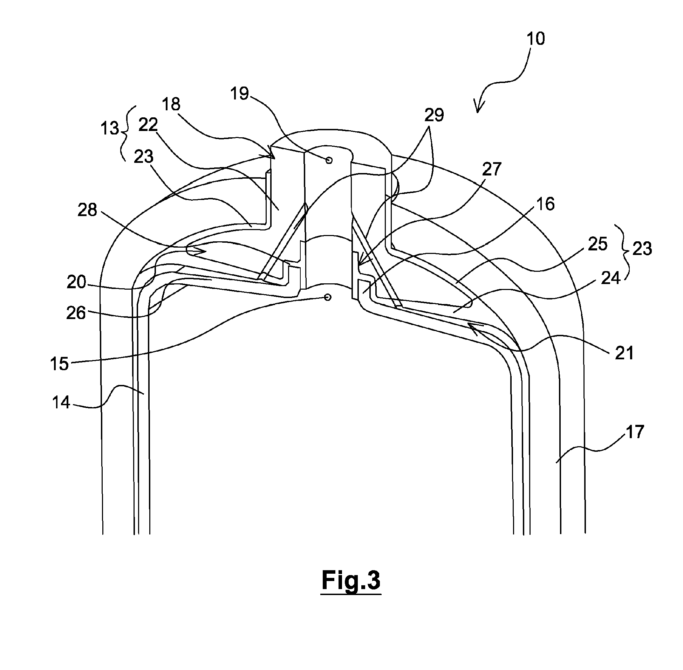

Les Figures 1 à 3 décrivent un réservoir destiné au stockage de gaz sous pression selon un premier mode de réalisation de la présente invention.

Ce réservoir 10 comporte une partie centrale 11 sensiblement cylindrique fermée à ses deux extrémités par des dômes 12. Un de ces dômes 12 est pourvu d'une embase 13 pour assurer la connexion intérieur/extérieur du réservoir, et par conséquent, le remplissage en gaz et le vidage. A cet effet, cette embase 13 est notamment destiné à recevoir un raccord tel qu'un robinet, une vanne ou encore un tuyau.

Le réservoir 10 comporte une enveloppe interne 14 étanche, encore appelée liner, définissant une chambre de stockage dans laquelle un gaz sous pression est destiné à être stocké. Ce liner 14 comporte à une de ses extrémités une ouverture 15 circulaire délimitée par un col 16 du liner. Le liner 14 est ici constitué d'un polymère tel que du polyamide, du polyéthylène de haute densité (HDPE), du polyuréthane (PU), ...

Le liner 14 est également entouré d'une enveloppe 17 de renforcement mécanique destinée à renforcer mécaniquement le réservoir pour supporter la pression du gaz stocké dans la chambre de stockage.

Comme le montre la Figure 2, l'enveloppe 17 de renforcement mécanique recouvre la partie inférieure de l'embase 13.

Cette enveloppe 17 de renforcement est, par exemple, réalisée dans un matériau composite obtenu par enroulement filamentaire de fibres unidirectionnelles imprégnées de résine. Chaque couche est orientée par rapport à l'axe longitudinal du réservoir d'un angle de bobinage. On utilise de préférence des fibres longues qui assurent une meilleure résistance face aux déformations successives et répétitives, par exemple des fibres de verre ou de carbone liées entre elles par une résine telle qu'une résine époxy.

L'embase 13 comporte une partie de col 18 cylindrique creux définissant un canal 19 intérieur et une partie annulaire 20 s'étendant à partir de la partie inférieure de la partie de col 18.

Cette partie annulaire 20 comprend une surface inférieure 21, cette surface inférieure constituant la surface inférieure de l'embase 13.

Cette embase 13 est par ailleurs constituée d'un insert 22 dont une partie au moins de sa surface est recouverte d'une interface plastique 23.

Cet insert 22 est réalisé dans un matériau métallique ou en alliage. A titre purement illustratif, il est réalisé ici en acier.

L'interface plastique 23 comporte, quant à elle, une première partie 24 définissant l'intégralité de la surface inférieure 21 de la partie annulaire 20 de l'embase 13 et une deuxième partie 25 recouvrant la surface supérieure de la l'insert et s'étendant pour couvrir en partie la surface extérieure de la partie de col 18 de l'embase.

La surface inférieure 21 de cette embase 13 est placée en vis-à-vis d'une surface de contact 26 du liner 14.

Par ailleurs, la partie de col 18 de l'embase comporte dans sa partie inférieure à partir de la laquelle s'étend radialement la partie annulaire 20, une gorge 27 annulaire cylindrique débouchant dans le canal 19 intérieur et la première partie 24 de l'interface plastique 23 comporte une portion tubulaire 28 creuse reçue dans cette gorge annulaire en assurant une continuité de profil du canal intérieur 19. Cette portion tubulaire 28 creuse comporte une rainure pour recevoir le col 16 du liner et assurer l'assemblage ici par collage de ce col 16 et de l'embase 13.

L'embase 13 comporte également deux évents 29 identiques qui sont ici des conduits tubulaires, placés de biais et symétriquement par rapport au canal 19 intérieur de l'embase 13.

Chaque évent 29 débouche à une première de ses extrémités, dans la partie supérieure de ce canal 19 intérieur et à son autre extrémité, à la surface inférieure 21 de l'embase 13, en traversant donc ici simultanément, l'insert 22 et la première partie 24 de l'interface plastique 23.

Ces évents 29 sont en communication de fluide avec l'espace, ou interstice, séparant la surface externe du liner 14 de la surface interne de l'enveloppe 17 de renforcement pour assurer l'évacuation des gaz ayant traversé la paroi du liner 14.

On observe avantageusement que ce réservoir simple dans sa conception et dans son mode opératoire, assure une évacuation efficace des gaz ayant traversé la paroi du liner 14.

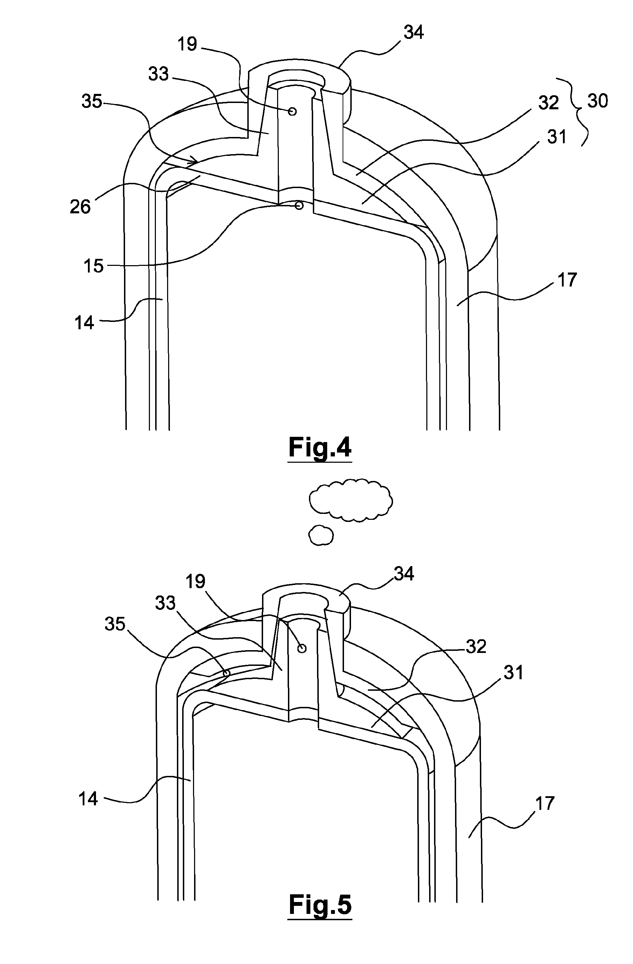

Les Figures 4 et 5 montrent un réservoir de stockage de gaz sous pression selon un deuxième mode de réalisation de la présente invention. Par souci de concision, les éléments des Figures 4 et 5 portant les mêmes références que les éléments des Figures 1 à 3 représentent les mêmes objets, lesquels ne seront pas décrits de nouveau ci-après.

Le réservoir des Figures 4 et 5 se distingue de celui des Figures 1 à 3 en ce que l'embase 30 comprend un premier 31 élément d'embase uniquement solidaire du liner 14 et un second 32 élément d'embase, distinct du premier 31 élément d'embase, solidaire de la seule enveloppe 17 de renforcement mécanique.

Ces deux éléments d'embase 31, 32 définissant ainsi l'embase 30 du réservoir sont non liés entre eux de sorte que le second 32 élément d'embase étant fixe car lié à l'enveloppe 17 de renforcement mécanique, le premier 31 élément d'embase se déplace par rapport à ce second 32 élément d'embase lorsque la chambre de stockage est vidée de son contenu.

A cet effet, le raccord (non représenté) destiné à être partiellement reçu dans le canal 19 intérieur de l'embase 30 est fixé ou intégré uniquement à la portion de col 33 du premier 31 élément d'embase de manière à autoriser ce déplacement.

Néanmoins, ces premier et second éléments 31, 32 d'embase sont configurés de sorte que lorsque la chambre de stockage du réservoir est vidée de son contenu, la portion de col 33 du premier 31 élément d'embase reste engagée dans la portion de col 34 du second 32 élément d'embase.

Avantageusement, le premier 31 élément d'embase présente une portion de col 33 mâle conique tandis que le second 32 élément d'embase comporte une portion de col 34 femelle conique.

Ainsi, ces éléments d'embase 31, 32 coopèrent entre eux pour former la partie de col de l'embase 30. En outre, cette géométrie des portions de col assure un guidage de la portion de col 33 du premier 31 élément d'embase dans la portion de col 34 du second 32 élément d'embase lors du remplissage de la chambre de stockage.

L'évent 35 est donc ici formé par l'espace séparant les premier et deuxième éléments d'embase 31, 32. Cet évent 35 est de géométrie évolutive lorsque la chambre de stockage est vidée de son contenu ou remplie et mise sous pression.

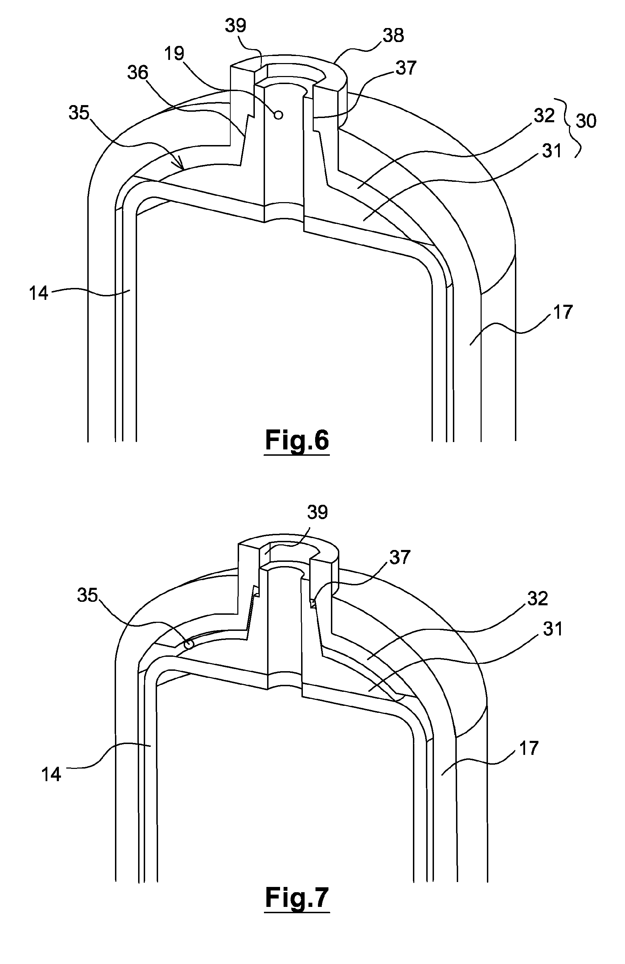

Les Figures 6 et 7 montrent un réservoir de stockage de gaz sous pression selon un troisième mode de réalisation de la présente invention. Par souci de concision, les éléments des Figures 6 et 7 portant les mêmes références que les éléments des Figures 4 et 5 représentent les mêmes objets, lesquels ne seront pas décrits de nouveau ci-après.

Le réservoir des Figures 6 et 7 se distingue de celui des Figures 4 et 5 en ce que :
- d'une part, le premier 31 élément d'embase uniquement solidaire du liner 14 comporte dans la partie supérieure de sa portion de col 36 tronconique, et sur sa surface externe, des découpes 37 à angle droit, ou méplats, définissant latéralement sur la surface extérieure de ladite portion de col 36, deux faces planes, et
- d'autre part, le second 32 élément d'embase, distinct du premier 31 élément d'embase et solidaire de la seule enveloppe 17 de renforcement mécanique, comporte dans la partie supérieure de sa portion de col 38 tronconique, et sur la surface intérieure de cette portion de col 38, des découpes 39 à angle droit, ou méplats dont la forme coopère avec celle des découpes 37 de la portion de col 36 du premier élément d'embase 31 pour bloquer en rotation les éléments d'embase 31, 32 entre eux.

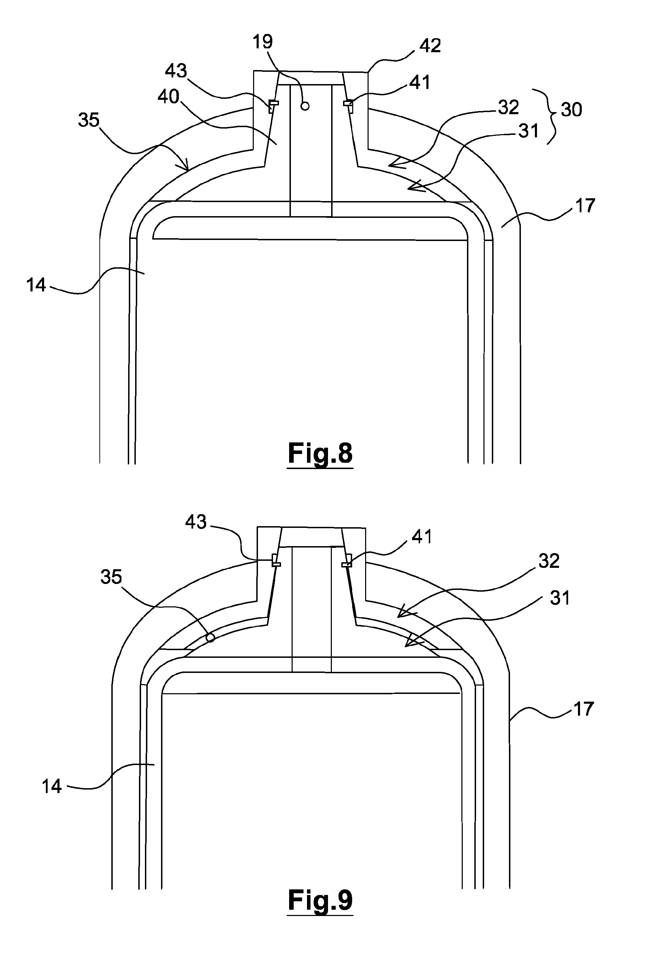

Les Figures 8 et 9 montrent un réservoir de stockage de gaz sous pression selon un quatrième mode de réalisation de la présente invention. Par souci de concision, les éléments des Figures 8 et 9 portant les mêmes références que les éléments des Figures 4 et 5 représentent les mêmes objets, lesquels ne seront pas décrits de nouveau ci-après.

Le réservoir des Figures 8 et 9 se distingue de celui des Figures 4 et 5 en ce que :
- d'une part, le premier 31 élément d'embase uniquement solidaire du liner 14 comporte dans la partie supérieure de sa portion de col 40 tronconique, et sur sa surface externe, un anneau élastique 41 entourant ladite portion de col 40, et
- d'autre part, le second 32 élément d'embase, distinct du premier 31 élément d'embase et solidaire de la seule enveloppe 17 de renforcement mécanique, comporte dans la partie supérieure de sa portion de col 42 tronconique, et sur la surface intérieure de cette portion de col 42, une gorge 43 recevant ledit anneau élastique 41 et dont l'épaisseur de la gorge 43 détermine la course de déplacement du premier 31 élément d'embase par rapport au second 32 élément d'embase.

Il est ainsi possible de bloquer en translation ledit premier 31 élément d'embase tout en guidant son déplacement.

Alternativement, il pourrait encore être possible de bloquer en translation le premier 31 élément d'embase par le biais du raccord destiné à être fixé dans le canal 19 de cet élément d'embase 31. Ce raccord qui présenterait, à cet effet, une section en forme de T, aurait un diamètre extérieur de tête de ce bouchon supérieur au diamètre du canal 19 de sorte que cette tête venant prendre appui sur le rebord supérieur du second 32 élément d'embase lors du vidage du réservoir, il empêcherait le premier 31 élément d'embase de se déplacer davantage.

## Revendications

1. Réservoir destiné au stockage de milieux liquides ou gazeux sous pression, comprenant une enveloppe (14) intérieure définissant une chambre de stockage, ladite enveloppe (14) intérieure comprenant une ouverture (15), une embase (13) placée au niveau de ladite ouverture (15) pour assurer la connexion intérieur/extérieur dudit réservoir et une enveloppe (17) de renforcement mécanique entourant au moins ladite enveloppe (14) intérieure, ladite embase (13) comportant une partie de col (18) cylindrique creux définissant un canal (19) intérieur et une partie annulaire (20) comprenant une surface inférieure constituant la surface inférieure de ladite embase (13), ladite surface inférieure étant placée en vis-à-vis d'une surface de contact (26) de ladite enveloppe (14) intérieure, **caractérisé en ce que** ladite embase (13) comporte au moins un évent (29,35) distinct dudit canal, ledit au moins un évent (29,35) débouchant à une première de ses extrémités à la surface inférieure de ladite partie annulaire (20) et à son autre extrémité dans ledit canal (19) intérieur de manière à assurer l'évacuation des gaz ayant traversé la paroi de l'enveloppe (14) intérieure.

2. Réservoir selon la revendication 1, **caractérisé en ce que** ledit canal (19) intérieur comportant une portion de canal supérieure appelée portion hors pression de stockage, et une portion de canal inférieure, appelée portion sous pression de stockage, lesdites portions étant délimitées ou destinées à être délimitées par un joint d'étanchéité, ledit au moins un évent (29,35) débouche à sa première extrémité dans ladite portion de canal supérieure.

3. Réservoir selon la revendication 1 ou 2, **caractérisé en ce que** ledit au moins un évent (29,35) débouche à sa seconde extrémité sur une portion de ladite surface inférieure distincte de la périphérie de ladite partie annulaire (20).

4. Réservoir selon l'une quelconque des revendications 1 à 3, **caractérisé en ce que** ledit évent (29,35) ou au moins certains desdits évents (29,35) sont formés chacun par une ouverture (15) réalisée dans l'épaisseur de ladite embase (13).

5. Réservoir selon la revendication 4, **caractérisé en ce que** ladite embase (13) comprend au moins deux conduits répartis régulièrement autour dudit canal et rejoignant la surface inférieure de ladite partie annulaire (20)

6. Réservoir selon la revendication 4 ou 5, **caractérisé en ce que** ladite embase (13) comportant un insert (22) métallique ou en alliage dont une partie au moins de sa surface est recouverte d'une interface plastique (23), une première partie (24) de ladite interface plastique forme la surface inférieure ou partiellement la surface inférieure de ladite partie annulaire (20) et une deuxième partie (25) de ladite interface recouvre au moins en partie la surface supérieure de ladite partie annulaire (20).

7. Réservoir selon la revendication 6, **caractérisé en ce que** ladite enveloppe (14) intérieure comprenant un col, la partie de col de l'embase (13) comporte dans sa partie inférieure à partir de la laquelle s'étend radialement ladite partie annulaire (20), une gorge annulaire cylindrique et **en ce que** l'interface plastique comporte une portion tubulaire creuse reçue au moins dans ladite gorge annulaire, ladite portion tubulaire creuse comprenant une zone d'assemblage avec ledit col de l'enveloppe (14) intérieure.

8. Réservoir selon l'une quelconque des revendications 1 à 3, **caractérisé en ce que** ladite embase (13) comprend une première portion d'embase (13) solidaire de ladite enveloppe (14) intérieure et une seconde portion d'embase (13) solidaire de ladite enveloppe (17) de renforcement mécanique, lesdites première et seconde portions d'embase (13) étant distinctes et non liées entre elles, ledit évent (29,35) étant formé par l'espace séparant lesdites portions d'embase (13).

9. Réservoir selon la revendication 8, **caractérisé en ce que** chacune desdites portions d'embase (13) comprenant une portion de ladite partie de col et une portion de ladite partie annulaire (20), et ladite seconde portion d'embase (13) étant fixe, ladite première portion d'embase (13) est mobile par rapport à ladite seconde portion d'embase (13) entre une première position dite de réservoir plein où ladite enveloppe (14) intérieure étant remplie et sous pression, ladite première portion d'embase (13) est au moins partiellement en contact avec ladite seconde portion d'embase (13), l'extrémité libre de la portion de partie de col de la première portion d'embase (13) étant placée en retrait de l'extrémité libre de la portion de la partie de col de la seconde portion d'embase (13), et une seconde position dite réservoir vide, où ladite enveloppe (14) intérieure étant vide de son contenu, l'extrémité libre de la portion de partie de col de ladite première portion d'embase (13) est entourée au moins en partie par la portion de partie de col de la seconde portion d'embase (13) de sorte que lesdites portions de partie de col desdites portions d'embase (13) restent engagées au moins partiellement l'une dans l'autre.

10. Réservoir selon la revendication 9, **caractérisé en ce que** la première portion d'embase (13) comporte une portion de partie de col mâle conique et la deuxième portion d'embase (13) comporte une portion de partie de col femelle conique, lesdites portions de partie de col coniques coopérant entre elles pour définir ladite partie de col de ladite embase (13).

11. Réservoir selon la revendication 9 ou 10, **caractérisé en ce qu'**il comporte au moins un moyen formant butée pour empêcher le désengagement de la première portion d'embase mobile par rapport à la seconde portion d'embase.

12. Réservoir selon l'une quelconque des revendications 8 à 11, **caractérisé en ce qu'**il comporte un moyen de blocage en rotation desdites portions d'embase (13) entre elles.

13. Réservoir selon l'une quelconque des revendications 1 à 12, **caractérisé en ce qu'**au moins une partie de la surface inférieure de ladite partie annulaire (20) comporte une ou plusieurs rainures débouchant à une de leurs extrémités dans ledit au moins un évent (29,35) et à leur autre extrémité à la périphérie de ladite partie annulaire (20) de manière à former des chemins de collecte et d'évacuation des gaz piégés.

14. Réservoir selon l'une quelconque des revendications 1 à 13, **caractérisé en ce que** ladite enveloppe (14) intérieure est métallique ou en matière plastique.

15. Réservoir selon l'une quelconque des revendications 1 à 14, **caractérisé en ce qu'**il est rempli avec un gaz ou un mélange de gaz.

16. Moyen de transport équipé d'au moins un réservoir selon l'une quelconque des revendications 1 à 15.

17. Utilisation du réservoir selon l'une quelconque des revendications 1 à 15 comme source d'alimentation en gaz ou en combustible.

18. Utilisation du réservoir selon l'une quelconque des revendications 1 à 15 comme accumulateur d'énergie.
